# EUROPÄISCHE PATENTSCHRIFT

(11) **EP 0 568 849 B1**
(45) Veröffentlichungstag und Bekanntmachung des Hinweises auf die Patenterteilung: **17.07.1996**
(21) Anmeldenummer: 93106216.0
(22) Anmeldetag: 16.04.1993
(51) Int. Cl.: B23F 19/05, B23F 19/06

(54) **Verfahren zum Feinbearbeiten von balligen und/oder konischen Verzahnungen und zur Ausführung dieses Verfahrens geeignete Maschine**
Method for finishing crowned and/or conical gear teeth and machine for carrying out this method
Procédé pour le finissage des dents de roues dentées ayant une denture bombée ou conique et machine pour la mise en oeuvre de ce procédé

(30) Priorität: 05.05.1992 DE 4214851
(43) Veröffentlichungstag der Anmeldung: 10.11.1993
(73) Patentinhaber: THE GLEASON WORKS, Rochester New York 14692-2970 (US)
(72) Erfinder: Schriefer, Herbert, Dr., W-8035 Gauting (DE)
(74) Vertreter: Stahl, Gerhard F.W.

(56) Entgegenhaltungen:
- EP-A- 0 360 953
- DE-B- 1 147 460
- US-A- 2 280 045

## Beschreibung

Die Erfindung betrifft ein Verfahren zum Feinbearbeiten von balligen oder konisch-balligen Zahnflanken an Zahnrädern nach dem Oberbegriff des Patentanspruchs 1 und die Verwendung einer Machine zur Ausführung dieses Verfahrens nach Patentanspruch 4.

Ein solches Verfahren ist bekannt von der EP 0 360 953 A2. Dort ist ein zahnradförmiges Werkzeug drehantreibbar in einem Wekzeugkopf aufgenommen, der um eine senkrecht zur Werkzeug- und zur Werkstückachse gerichtete Einstellachse dreheinstellbar in einer um eine horizontale Achse schwenkbaren Wiege an einem in horizontaler Richtung verfahrbaren Vorschubschlitten geführt ist. Die beiden Bewegungsrichtungen sind um 90° zueinander versetzt. Der Vorschubschlitten ist an einem in vertikaler Richtung verfahrbaren Zustellschlitten geführt.

Eine hinsichtlich der Schlittenbewegungen ähnliche Maschine ist von dem DE-Gbm 88 05 237.0 bekannt. Zum Erzeugen balliger und/oder konischer Zahnflanken an der Werkstück-Verzahnung wird bei dieser Maschine jedoch nicht das Werkzeug geschwenkt, sondern der das Werkstück tragende Maschinentisch führt eine Schwenkbewegung aus um eine quer zur Werkstückachse gerichtete Schwenkachse.

Beiden bekannten Maschinen ist gemeinsam, daß - ohne die Rotations- und reinen Einstellachsen - vier Maschinenachsen vorhanden sind, deren Bewegungen von der Maschinensteuerung, die vorher entsprechend programmiert werden muß, gesteuert werden. Je mehr Achsen an einer Werkzeugmaschine zu steuern sind, desto größer ist der Programmier-Aufwand und desto größer ist auch die Gefahr von Sollwert-Abweichungen am bearbeiteten Werkstück. Auch wird die sog. Wiederholgenauigkeit kleiner, je mehr Achsen zu steuern sind. Das gilt in ganz besonderem Maße für Zahnradbearbeitungsmaschinen, wo Zustellbewegungen in der Größenordnung von nur wenigen µm nichts außergewöhnliches sind.

Ausgehend von dieser Problematik liegt der Erfindung die Aufgabe zugrunde, ein Verfahren und eine zu seiner Ausführung geeignete Maschine zu entwickeln, das bzw. die das Feinbearbeiten von balligen oder konisch-balligen Zahnflanken mit weniger als vier zu steuernden Maschinenachsen ermöglicht.

Für das Verfahren besteht die erfindungsgemäße Lösung in der im Patentanspruch 1 angegebenen Bewegung des Werkzeugs relativ zum Werkstück, und für die Maschine in dem im Patentanspruch 4 angegebenen Weglassen eines bei derartigen Maschinen bisher unabdingbaren Bestandteils.

Ein Verfahren zum Feinbearbeiten balliger Zahnflanken, bei dem die erzeugenden Zonen des zahnradförmigen Werkzeugs ebenfalls tangentialen Kontakt mit den zu erzeugenden Zahnflanken des Werkstücks haben, ist aus der DE 31 42 843 C2 bekannt. Die dafür verwendete Maschine ist jedoch mit einer Schwenkeinrichtung in Form einer Wiege ausgerüstet. Letztere erfordert übrigens einen erheblichen fertigungstechnischen Aufwand, um eine einwandfreie Führung zu gewährleisten.

Ein weiterer Vorteil der erfindungsgemäßen Maschine ist, daß infolge des Wegfallens der Schwenkeinrichtung, die ja in jedem Fall den Bearbeitungsdruck aufnehmen mußte, die Steifigkeit der Maschine beträchtlich erhöht wird.

Das Verfahren nach dem Patentanspruch 1 läßt sich für die Feinbearbeitung nicht nur von außenverzahnten Werkstücken, sondern gemäß Patentanspruch 2 ebenso vorteilhaft auch von innenverzahnten Werkstücken anwenden. Daneben ist es nicht auf die Verwendung eines außenverzahnten Werkzeugs beschränkt, sondern kann gemäß Patentanspruch 3 in ebenso vorteilhafter Weise auch mit innenverzahnten Werkzeugen ausgeführt werden.

Die Erfindung wird nachstehend anhand eines in 10 Figuren dargestellten Ausführungsbeispiels beschrieben. Dabei zeigt
- Fig. 1: einen Längsschnitt durch ein Zahnrad (Werkstück) mit balliger Verzahnung,
- Fig. 2: einen Querschnitt durch die Verzahnung des Zahnrades von Fig. 1,
- Fig. 3: das Zusammenwirken eines Werkzeug-Zahnes mit einem Werkstück-Zahn in einem Kontaktpunkt,
- Fig. 4: eine Ansicht der erfindungsgemäßen Maschine,
- Fig. 5: eine Ansicht der Maschine in Pfeilrichtung II gemäß Fig. 4,
- Fig. 6: eine perspektivische Ansicht eines wesentlichen Teils der Maschine,
- Fig. 7 und 8: den Bewegungsablauf zwischen Werkzeug und Werkstück in zwei Ansichten,
- Fig. 9: ein anderes Zahnrad in einer Ansicht, und
- Fig. 10: die Lage der Achsen von Werkzeug und Werkstück bei den Fig. 7 und 8 gezeigten Stellungen des Werkzeugs.

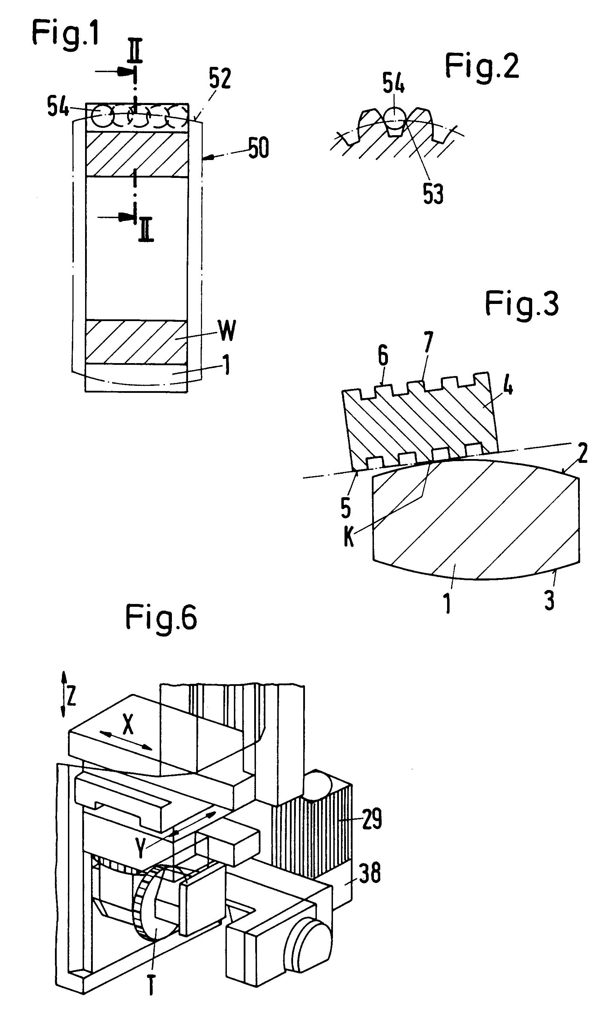

Ein in Fig. 1 im Längsschnitt dargestelltes Zahnrad bzw. Werkstück W hat Zähne 1, deren Zahnflanken 2,3 längsballig sind, wie das in Fig. 3 gezeigt ist. (Der größeren Deutlichkeit halber sind die Darstellungen etwas vereinfacht und teilweise, insbes. bei der Balligkeit, stark übertrieben.) Zum Feinbearbeiten seiner Zahnflanken 2,3 ist ein zahnradförmiges Werkzeug T vorgesehen, das ein auf seinen Zahnflanken 5,6 geometrisch definierte Schneidkanten 7 aufweisendes Schabrad oder ein auf seinen Zahnflanken eine abrasive Oberfläche aufweisendes Honrad, Hartschabrad od. dgl. sein kann. Damit eine einwandfreie Oberfläche auf den Flanken erzeugt wird, ist es notwendig, daß die erzeugenden Zonen der Zahnflanken 5,6 des Werkzeugs T in jedem Kontaktpunkt K tangential an den Zahnflanken 2,3 des Werkstücks W anliegen (Fig. 3).

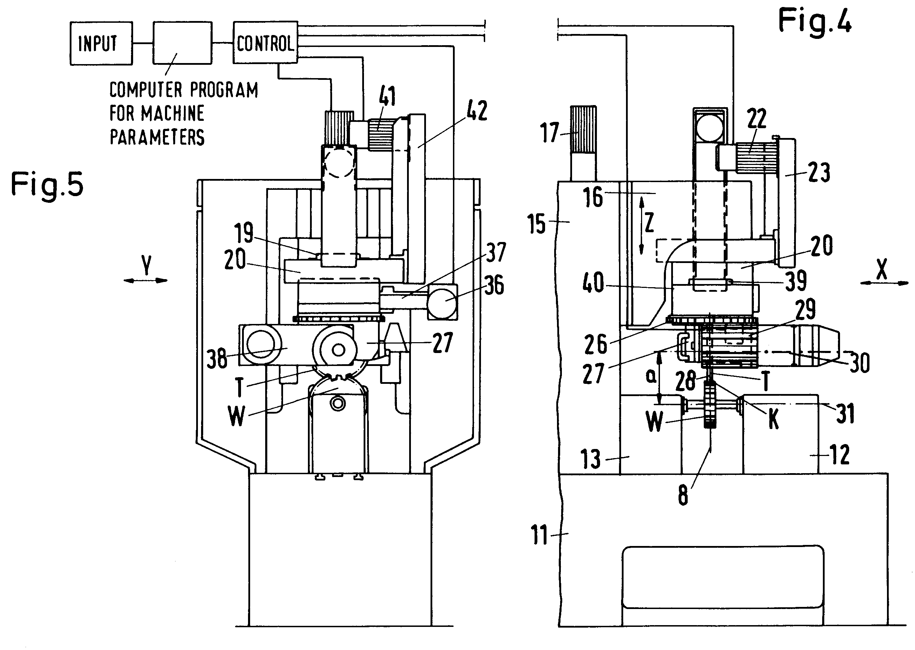

Eine Maschine zum Feinbearbeiten der balligen Zahnflanken 2,3 des Werkstücks W ist in den Fig. 4 bis 6 in drei verschiedenen Ansichten dargestellt. Auf einem Bett 11 ist das durch Schaben, Honen oder ein ähnliches Verfahren zu bearbeitende verzahnte Werkstück W zwischen Reitstöcken 12,13 drehbar aufgenommen. Auf einem Ständer 15 ist ein Zustellschlitten 16 senkrecht verschiebbar (Pfeilrichtung Z) und dafür mit einem Motor 17 und einem nicht gezeigten Spindeltrieb antreibbar. In einer Längsführung 19 ist ein Vorschubschlitten 20 parallel zur Werkstückachse 31 hin und her verfahrbar aufgenommen (Pfeilrichtung X), wofür ein Motor 22 mit einem Getriebe 23 vorgesehen ist.

In einer gegenüber der Längsführung 19 um 90° versetzten zweiten Längsführung 39 am Vorschubschlitten 20 ist ein Querschlitten 40 hin und her verfahrbar aufgenommen (Pfeilrichtung Y), wofür ein Motor 41 mit einem Getriebe 42 vorgesehen ist.

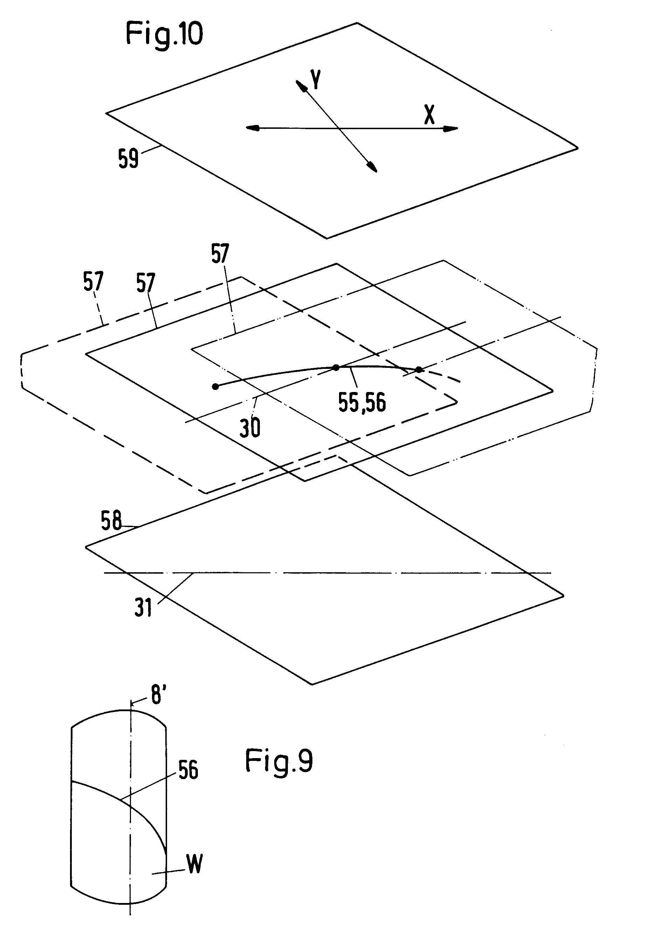

In einer Rundführung 26 an der Unterseite des Querschlittens 40 ist ein Werkzeugkopf 27 um eine vertikale Achse 28 dreheinstellbar aufgenommen. Im Werkzeugkopf 27 ist das zahnradförmige Werkzeug T gelagert, das von einem Motor 29 über ein Getriebe 38 antreibbar ist. Die Drehachse 28 des Werkzeugkopfes 27 liegt zu Beginn eines jeden Bearbeitungsvorganges bei Werkstücken mit symmetrischer Balligkeit vorzugsweise, aber nicht zwingend, in der mittleren Rotationsebene 8 des Werkzeugs T bzw. bei Werkstücken mit asymmetrischer Balligkeit (vgl. Fig. 9) in der im Scheitelpunkt der Balligkeit liegenden Rotationsebene 8'.

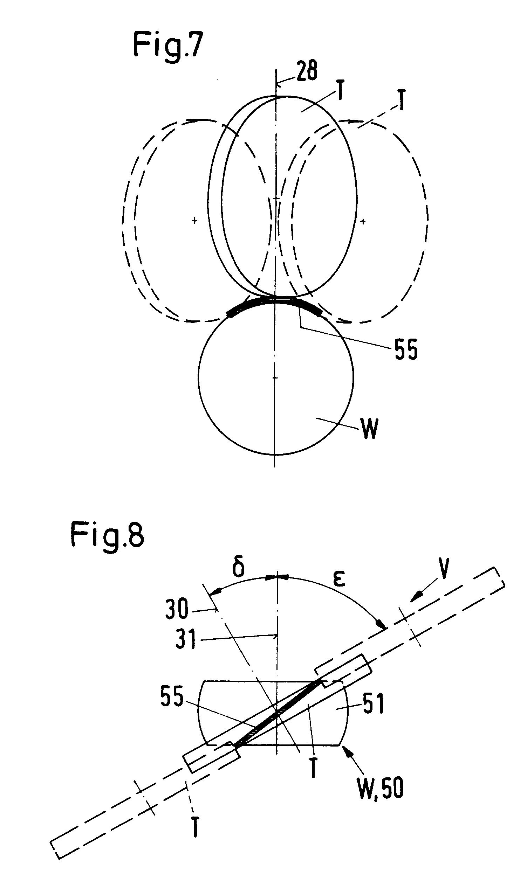

Durch Verdrehen des Werkzeugkopfes 27 um die Achse 28, wofür ein Motor 36 und ein Getriebe 37 vorgesehen sind, wird ein Achskreuzwinkel δ zwischen der Achse 30 des Werkzeugs T und der Werkstückachse 31 eingestellt. Die Achsen 30, 31 liegen dabei in parallelen Ebenen 57,58, auf die noch eingegangen wird. Durch entsprechende Abstimmung der Bewegung X des Vorschubschlittens 20 und der Bewegung des Querschlittens 40 wird die Vorschubrichtung V des Werkzeugs T eingestellt, die zur Bildebene der Fig.1, 2 unter einem Vorschubwinkel ε (Fig. 8) geneigt ist.

Das erfindungsgemäße Verfahren läuft folgendermaßen ab: Das Werkzeug T wird in bekannter Weise mit dem Werkstück W in rotierenden Zahneingriff gebracht, und zwar mit Ein- oder mit Zweiflankenanlage. Sodann führt das Werkzeug T, ausgehend von der oben erwähnten Lage, in ebenfalls bekannter Weise mindestens eine hin- und hergehende Bewegung in der Vorschubrichtung V aus, wobei in der Regel mindestens einmal eine Zustellbewegung im Sinne einer Verringerung des Achsabstandes a erforderlich ist. Zum Erzeugen balliger Zahnflanken wird der aus den Bewegungskomponenten in der X- und in der Y-Richtung zusammengesetzten Vorschubbewegung in Richtung V ständig eine senkrecht dazu gerichtete positive oder negative Zusatzbewegung in Pfeilrichtung Z überlagert, und zwar derart, daß die von der einen Stirnseite des Werkstücks zur anderen geführten erzeugenden Zonen des Werkzeugs T in jedem Kontaktpunkt K immer auf der Mantelfläche 51 eines Hüllkörpers 50 liegen in der Weise, daß zwischen den Zahnflanken 5,6 des Werkzeugs T und den Zahnflanken 2,3 des Werkstücks W immer tangentialer Kontakt besteht. Diese Zusatzbewegung ist unabhängig von der Zustellbewegung und darf nicht mit dieser verwechselt werden.

Die Mantelfläche 51 des Hüllkörper 50 ist definiert durch eine Mantellinie 52, die durch die Berührpunkte 53 einer unter beidseitiger Anlage im jeweiligen Wälzkreis durch eine Zahnlücke des Werkstücks W geführten Kugel 54. Der Hüllkörper 50 des ballige Zahnflanken 2,3 aufweisenden Werkstücks W entspricht somit dem Wälzkörper, d.h. der axialen Erstreckung des Wälzkreises, bei einem Werkstück mit nicht-balligen, also parallelen Zahnflanken. Wenn das Werkstück W nur im Bereich der Zahnenden ballige Flankenabschnitte erhalten soll, dann entfällt die Zusatzbewegung in dem dazwischen liegenden nicht balligen Abschnitt.

Wenn das Werkstück W eine symmetrische Balligkeit haben soll, wie das in Fig. 1 und 8 dargestellt ist, dann bewegen sich die Kontaktpunkte K auf einer ebenen Kurve 55, die in Z-Richtung gesehen als Gerade erscheint (Fig. 8). Erhält das Werkstück W dagegen eine asymmetrische Balligkeit, wie sie als nur ein Beispiel dafür in Fig. 9 dargestellt ist, dann bewegen sich die Kontaktpunkte K auf einer räumlichen Kurve 56.

Unabhängig vom Verlauf und von der Form der Kurve 55,56 liegen die Werkzeug-Achse 30 und die Werkstück-Achse 31 in jeder Lage des Kontaktpunktes in zueinander und zu einer durch die Achsen X und Y definierten Ebene 59 parallelen Ebenen 57,58 (Fig. 10), wobei die die Werkstück-Achse 31 enthaltende Ebene 58 ihre Lage nicht verändert, d.h. insbes. keine Drehung um die Achse 31 ausführt.

Die verschiedenen vom Werkzeug T auszuführenden Bewegungen können unabhängig voneinander erfolgen, ihre gegenseitige Abhängigkeit wird nur durch eine entsprechende Programmierung der Maschinen-Steuerung bewirkt. Dadurch können praktisch beliebige Korrekturen in der Flankenlinie weitestgehend realisiert werden. Es ist lediglich dafür Sorge zu tragen, daß das Werkzeug T immer auf der Mantelfläche 51 des Hüllkörpers 50 enlanggeführt wird und die erzeugenden Zonen seiner Zahnflanken 5,6 in jedem Kontaktpunkt tangential an den Werkstück-Zahnflanken 2,3 anliegen. Durch entsprechende Programmierung ist es darüberhinaus auch möglich, z.B. den Vorschubwinkel ε während eines Bearbeitungszyklus zu ändern, wenn dies für die Form der zu erzeugenden Balligkeit sinnvoll ist.

Die im Vorstehenden für ballige Verzahnungen beschriebenen Abläufe und die dafür benutzte Maschine sind sinngemäß in gleicher Weise auch für konisch-ballige Verzahnungen anwendbar.

### Begriffsliste:

- 1: Zahn von W
- 2: Zahnflanke von W
- 3: Zahnflanke von W
- 4: Zahn von T
- 5: Zahnflanke von T
- 6: Zahnflanke von T
- 7: Schneidkante
- 8, 8': mittlere Rotationsebene von T
- 9: -
- 10: -
- 11: Bett
- 12: Reitstock
- 13: Reitstock
- 14: -
- 15: Ständer
- 16: Zustellschlitten
- 17: Motor für 16
- 18: -
- 19: Längsführung
- 20: Vorschubschlitten
- 21: -
- 22: Motor für 20
- 23: Getriebe
- 24: -
- 25: -
- 26: Rundführung
- 27: Werkzeugkopf
- 28: Achse von 26
- 29: Motor von T
- 30: Achse von T
- 31: Achse von W
- -:
- 36: Motor für 26
- a: Achsabstand
- K: Kontaktpunkt
- T: Werkzeug
- V: Vorschubrichtung
- W: Werkstück
- X: Bewegungsrichtung horizontal
- Y: Bewegungsrichtung horizontal
- Z: Bewegungsrichtung vertikal
- δ: Achskreuzwinkel
- ε: Vorschubwinkel
- 37: Getriebe
- 38: Getriebe von T
- 39: Längsführung
- 40: Querschlitten
- 41: Motor für 40
- 42: Getriebe
- -:
- 50: Hüllkörper
- 51: Mantelfläche
- 52: Mantellinie
- 53: Berührpunkt
- 54: Kugel
- 55: Kurve
- 56: Kurve

## Patentansprüche

1. Verfahren zum Feinbearbeiten von balligen oder konisch-balligen Zahnflanken (5,6) an Zahnrädern (W) mit einem zahnradförmigen Werkzeug (T), das an seinen Zahnflanken (5,6) geometrisch definierte Schneidkanten (7) (Schabrad) oder eine abrasive Oberfläche (Honrad, Hartschabrad, od. dgl.) aufweist, und das mit unter einem Achskreuzwinkel (δ) gekreuzten Achsen (30,31) von Werkzeug (T) und Werkstück (W) mit dem Werkstück (W) in kämmendem Zahneingriff steht und dabei eine unter einem Winkel (ε) schräg zur Werkstückachse (31) gerichtete Vorschubbewegung (V) und eine senkrecht dazu gerichtete Zustellbewegung im Sinne einer Verringerung des Achsabstandes (a) ausführt,
**dadurch gekennzeichnet**, daß der Vorschubbewegung ständig eine senkrecht dazu gerichtete Zusatzbewegung überlagert wird und diese beiden Bewegungen so aufeinander abgestimmt sind, daß die erzeugenden Zonen des Werkzeugs (T) auf einer Kurvenbahn (55,56) von der einen Stirnseite des Werkstücks (W) zur anderen geführt werden, und daß die erzeugenden Zonen des Werkzeugs (T) in jedem Kontaktpunkt (K) mit den zu erzeugenden Werkstück-Zahnflanken (2,3) mit diesen tangentialen Kontakt haben.

2. Verfahren nach Anspruch 1, **gekennzeichnet durch** die Verwendung eines außenverzahnten Werkzeugs (T) für ein innenverzahntes Werkstück.

3. Verfahren nach Anspruch 1, **gekennzeichnet durch** die Verwendung eines innenverzahnten Werkzeugs für ein außenverzahntes Werkstück (W).

4. Verwendung einer Maschine zum Feinbearbeiten von balligen oder konisch-balligen Zahnflanken an Zahnrädern (Werkstücken W) zur Durchführung des Verfahrens gemäß mind. einem der Ansprüche 1 bis 3, bei dem
a) das Werkstück (W) ortsfest, aber drehbar auf dem Maschinenbett (11) gelagert ist,
b) das Werkzeug (T) in einem Werkzeugkopf (27) drehantreibbar aufgenommen ist, der um eine senkrecht zur Werkzeugachse (30) und zur Werkstückachse (31) gerichtete Einstellachse (28) dreheinstellbar ist,
c) Einrichtungen zum Einstellen und Bewegen des Werkzeugs (T) relativ zum Werkstück (W) in drei senkrecht zueinander stehenden Richtungen (X,Y,Z) vorhanden sind, und
d) Einrichtungen zum voneinander unabhängigen Steuern der Bewegungen in den drei senkrecht zueinander stehenden Richtungen (X,Y,Z) nach frei wählbaren Kriterien vorhanden sind, wobei
keine sonst bei Maschinen der genannten Art üblichen Einrichtungen zum Schwenken des Werkzeugs(T) oder des Werkstücks (W) um eine quer zu seiner Rotationsachse (30,31) und quer zur Einstellachse (28) gerichtete Schwenkachse vorhanden sind.

## Claims

1. A method of precision-machining crowned or conical-crowned tooth flanks (5, 6) on gearwheels (**W**) with a gearwheel-shaped tool (**T**), which is provided on its tooth flanks (5, 6) with geometrically defined cutting edges (7) (shaving wheel) or an abrasive surface (honing wheel, hard-material shaving wheel or the like) and which meshes with the teeth of the workpiece (**W**) with the axes (30, 31) of the tool (**T**) and the workpiece (**W**) crossed at an angle (δ) of axial intersection and which performs an advancing movement (**V**) orientated obliquely to the workpiece axis (31) at an angle (ε) and a feed movement orientated at right angles thereto so as to reduce the axial distance (**a**), **characterized in that** an additional movement orientated at right angles to the advancing movement is constantly superimposed on the said advancing movement and the said two movements are adapted to each other in such a way that the generating zones of the tool (**T**) are guided on a curved path (55, 56) from one front face of the workpiece (**W**) to the other, and at each point of contact (**K**) with the workpiece tooth flanks (2, 3) to be produced the generating zones of the tool (**T**) are in tangential contact with the said workpiece tooth flanks (2, 3).

2. A method according to Claim 1, **characterized b**y the use of an externally toothed tool (**T**) for an internally toothed workpiece.

3. A method according to Claim 1, **characterized by** the use of an internally toothed tool for an externally toothed workpiece (**W**).

4. Use of a machine for precision-machining crowned or conical-crowned tooth flanks on gearwheels (workpieces **W**) in order to perform the method according to at least one of Claims 1 to 3, in which
a) the workpiece (**W**) is mounted on the foundation plate (11) so as to be stationary but rotatable,
b) the tool (**T**) is received in a tool head (27) so as to be drivable in a rotating manner, the tool head (27) being settable in a rotary manner about a setting axis (28) extending at right angles to the tool axis (30) and to the workpiece axis (31),
c) devices for setting and moving the tool (**T**) relative to the workpiece (**W**) are provided in three directions (**X**, **Y**, **Z**) orientated at right angles to one another, and
d) devices for the mutually independent control of the movements in the three directions (**X**, **Y**, **Z**) orientated at right angles to one another in accordance with freely selectable criteria are provided, wherein
no devices otherwise customary in machines of the type described for pivoting the tool (**T**) or the workpiece (**W**) about a pivot axis orientated transversely to its axis of rotation (30, 31) and transversely to its setting axis (28) are provided.

## Revendications

1. Procédé pour le finissage de flancs de dents (5, 6) bombés ou coniquement bombés sur des roues dentées (W), avec un outil (T) en forme de roue dentée qui comporte sur ses flancs de dents (5, 6) des arêtes coupantes (7) géométriquement définies (outil de rasage) ou une surface abrasive (roue de rodage, roue de rasage dur, ou analogue) et qui, sous un angle de croisement (δ) des axes (30, 31) de l'outil (T) et de la pièce d'oeuvre (W), est en engrènement de peignage avec la pièce d'oeuvre (W) et accomplit alors un mouvement d'avance (V) orienté obliquement sous un angle (ε) par rapport à l'axe (31) de la pièce d'oeuvre et, orienté perpendiculairement à ce mouvement d'avance, un mouvement d'approche dans le sens d'une réduction de la distance entre axes (a), procédé caractérisé en ce qu'au mouvement d'avance est constamment superposé un mouvement supplémentaire orienté perpendiculairement à celui-ci, et ces deux mouvements sont accordés entre eux de façon que les zones génératrices de l'outil (T) soient guidées, de l'une des faces frontales de la pièce d'oeuvre (W) à l'autre, sur une trajectoire courbe (55, 56), et en ce que ces zones génératrices de l'outil (T), en chaque point de contact (K) avec les flancs de dents (2, 3) à engendrer de la pièce d'oeuvre, ont un contact tangentiel avec eux.

2. Procédé selon la revendication 1, caractérisée en ce qu'un outil (T) à denture externe est utilisé pour une pièce d'oeuvre (W) à denture interne.

3. Procédé selon la revendication 1, caractérisé en ce qu'un outil (T) à denture interne est utilisé pour une pièce d'oeuvre (W) à denture externe.

4. Utilisation d'une machine pour le finissage de flancs de dents bombées ou coniquement bombés sur des roues dentées (pièces d'oeuvre W), en application du procédé selon au moins l'une des revendications 1 à 3, dans lequel :
a) la pièce d'oeuvre (W) est montée à poste fixe, mais en étant susceptible de tourner sur le banc (11) de la machine,
b) l'outil (T) est saisi, en étant susceptible d'être entraîné en rotation, dans une tête d'outil (27) qui est susceptible d'être réglée en rotation autour d'un axe de réglage (28) orienté perpendiculairement par rapport à l'axe (30) de l'outil et par rapport à l'axe (31) de la pièce d'oeuvre,
c) il est prévu des dispositifs pour le réglage et le déplacement de l'outil (T) par rapport à la pièce d'oeuvre (W) dans trois directions (X, Y, Z) perpendiculaires entre elles,
d) il est prévu des dispositifs pour les commandes, indépendantes les unes des autres, des mouvements dans les trois directions (X, Y, Z) perpendiculaires entres elles, selon des critères susceptibles d'être librement choisis,
tandis qu'il n'est prévu aucun des dispositifs, par ailleurs habituels dans ce genre de machines, pour permettre le pivotement de l'outil (T) ou de la pièce d'oeuvre (W) autour d'un axe orienté transversalement par rapport à son axe de rotation (30, 31) et transversalement par rapport à l'axe de réglage (28).
